(19) Europäisches Patentamt
European Patent Office
Office européen des brevets

(11) Veröffentlichungsnummer: **0 176 775**
**A2**

(12) **EUROPÄISCHE PATENTANMELDUNG**

(21) Anmeldenummer: 85110927.2

(22) Anmeldetag: 30.08.85

(51) Int. Cl.⁴: C 08 L 71/04
C 08 L 87/00, C 08 L 25/12
C 08 L 51/00, C 08 G 81/02
C 08 K 5/42
//(C08L71/04, 61:06)

(30) Priorität: 06.09.84 DE 3432750

(43) Veröffentlichungstag der Anmeldung: 09.04.86 Patentblatt 86/15

(84) Benannte Vertragsstaaten: BE DE FR GB IT NL

(71) Anmelder: BASF Aktiengesellschaft
Carl-Bosch-Strasse 38
D-6700 Ludwigshafen(DE)

(72) Erfinder: Taubitz, Christof, Dr.
In der Dreispitz 15
D-6706 Wachenheim(DE)

(72) Erfinder: Muench, Volker, Dr.
Luitpoldstrasse 114
D-6700 Ludwigshafen(DE)

(72) Erfinder: Hambrecht, Juergen, Dr.
Werderstrasse 30
D-6900 Heidelberg(DE)

(72) Erfinder: Echte, Adolf, Dr.
Leuschnerstrasse 42
D-6700 Ludwigshafen(DE)

(72) Erfinder: Illers, Karl Heinz, Dr.
Huttenstrasse 20
D-6701 Otterstadt(DE)

(54) **Halogenfreie, selbstverlöschende thermoplastische Formmasse.**

(57) Die Erfindung betrifft eine halogenfreie, selbstverlöschende thermoplastische Formasse, enthaltend, jeweils bezogen auf die Formasse,

A 3 - 97 Gew.-% mindestens eines halogenfreien thermoplastischen Harzes, das einpolymerisiert enthält

$a_1$) 60 bis 91 Gew.-% mindestens eines vinylaromatischen Monmeren

$a_2$) 40 bis 9 Gew.-% von Acrylnitril

gegebenenfalls enthaltend

B bis zu 40 Gew.-% eines Elastomeren in Form eines Pfropfmischpolymerisates gebildet aus Monomeren $a_1$) und $a_2$) der Komponente A,

C 97 -- 3 Gew.-% mindestens eines halogenfreien Poly(phenylen)ethers,

D 0,5 - 40 Gew.-% mindestens einer Phosphor enthaltenden Verbindung (Flammschutzmittel),

E 4 - 30 Gew.-% mindestens eines Phenol-Aldehyd-Harzes, und

F 0,3 - 95 Gew.-% eines Copolymerisates, das aus einer Hauptkette und daran durch Kondensation angefügte Seitenketten besteht,

wobei die Hauptkette ein mittleres Molekulargewicht $\overline{M}_w$ im Bereich von 10 000 bis $10^7$ aufweist und die Seitenketten jeweils ein solches von 2 000 bis 80 000 aufweisen,

und wobei die Hauptkette ein Terpolymerisat darstellt, das einpolymerisiert enthält:

$f_a$) 60 - 91 Gew.-% eines vinylaromatischen Monomeren

$f_b$) 40 - 9 Gew.-% Acrylnitril

$f_c$) 0,3 - 10 Gew.-% mindestens eines Monomeren aus der Gruppe der

Ester der Acrylsäure und Methacrylsäure, die zur Esterbildung befähigte Alkoholreste enthalten

und wobei jede Seitengruppe mindestens einen, gegebenenfalls nicht substituierten Poly(phenylen)etherrest, PPE, aufweist, der, jeweils über die Gruppe X, den Rest eines mindestens bifunktionellen Kupplungsmittels, das Polymerisat -X-PPE der Seitengruppe an das (die) zur Etherbildung befähigten Monomere(n) ($f_c$) bindet.

EP 0 176 775 A2

Croydon Printing Company Ltd.

## Halogenfreie, selbstverlöschende thermoplastische Formmasse

Die Erfindung betrifft eine halogenfreie, selbstverlöschende thermoplastische Formmasse, enthaltend, jeweils bezogen auf die Formmasse,

A 3 - 97 Gew.-% mindestens eines halogenfreien thermoplastischen Harzes, das, bezogen auf A, einpolymerisiert enthält

$a_1$) 60 - 91 Gew.-% mindestens eines vinylaromatischen Monomeren mit 8 bis 9 C-Atomen

und

$a_2$) 40 - 9 Gew.-% von (Meth)acrylnitril,

gegebenenfalls enthaltend

B bis zu 40 Gew.-% eines Elastomeren mit einer Glastemperatur unterhalb von 0°C, das in Form eines Pfropfmischpolymerisates aus dem Monomeren $a_1$ und $a_2$ der Komponente A angewendet wird,

C 97 - 3 Gew.-% eines weiteren halogenfreien thermoplastischen Harzes.

D 0,5 - 40 Gew.-% mindestens einer Phosphor enthaltenden Verbindung (Flammschutzmittel)

und

E 4 - 30 Gew.-% mindestens eines Phenol-Aldehydharzes.

Zum Stand der Technik nennen wir folgende Druckschriften über die Flammfestausrüstung von Thermoplasten:

(1) Vogel, "Flammfestmachen von Kunststoffen", Hüthig-Verlag, Heidelberg (1966), Seiten 94 bis 102,
(2) Troitzsch, "Brandverhalten von Kunststoffen", Hanser-Verlag, München (1982), Seiten 1 bis 65,
(3) Hirschler, in "Developments in Polymer Stabilization", Band 5, Editor G. Scott, Applied Science Publishers, London (1982), Seiten 107 bis 151.

(4) DE-OS 30 19 617
(5) DE-OS 30 02 792
(6) US-PS 3,383,435
(7) US-PS 4,360,618
(8) Deutsche Patentanmeldung P 34 01 835.2

Die Flammfestausrüstung von thermoplastischen Kunststoffen ist aus (1), (2) und (3) bekannt. Bei Anwendung verhältnismäßig großer Mengen an Halogen enthaltenden Flammschutzmitteln und unter gleichzeitiger Anwendung von Synergisten, tropfen Thermoplaste nach dem Beflammen mit einer heißen Flamme nichtbrennend ab und verlöschen von selbst. Dieser Effekt des Selbstverlöschens tritt ohne die Anwendung eines Synergisten erst nach Zugabe einer weitaus größeren Menge an Halogen enthaltenden Flammschutzmitteln ein. So ausgerüstete Formmassen zeigen Nachteile, die vom Verarbeiter meist nicht toleriert werden. Charakteristisch sind z.B. die Verfärbung der Formmassen sowie die Korrosion von Verarbeitungsmaschinen. Ohne Verwendung von Synergisten muß die Flammschutzmittelmenge erhöht werden, was zu einer starken Beeinträchtigung der damit ausgerüsteten Thermoplaste und aufgrund einer deutlichen Absenkung der Wärmeformbeständigkeit zu brennendem Abtropfen führt. Diese Probleme können mithin nur durch eine Senkung der Menge an halogenhaltigen Flammschutzmitteln gelöst werden. Häufig erreichen die Thermoplaste dann jedoch nicht mehr die Einstufung UL 94 V0 oder UL 94 V1.

Außer der vorstehend angeführten Möglichkeit, thermoplastische Kunststoffe mit Halogen enthaltenden Flammschutzmitteln auszurüsten, gibt es auch die Möglichkeit eines halogenfreien Flammschutzes. So können beispielsweise Mischungen aus Poly(2,6-dimethyl-1,4-phenylen)ether (PPE) und schlagzähmodifiziertem Polystyrol (HIPS) durch Phosphor enthaltende organische Verbindungen flammfest ausgerüstet werden. Bezogen auf HIPS werden 50 bis 60 Gew.-% von PPE + Phosphorverbindungen zugesetzt [vgl. (4) und (5)].

Die Herstellung von Mischungen von Poly(phenylen)ether (PPE) mit Styrol-Polymeren werden ausführlich in (6) beschrieben. Dabei wird das PPE mit Homopolystyrol (PS), Styrol-Acrylnitril-Butadien-Polymeren (ABS) und/oder elastomer-modifiziertem Polystyrol (HIPS) versetzt.

Abmischungen von PPE mit zusätzlich Acrylnitril (AN) enthaltenden Polymeren wie SAN und ABS, sind bisher nicht bevorzugt worden, da die Eigenschaften der Formkörper weit unter den erwarteten Werten liegen, so daß sie nicht kommerziell anwendbar sind.

In (7) wird daher vorgeschlagen, Polystyrole mit AN-Gehalten von nur 2 - 8 Gew.-% einzusetzen. Schon bei einem AN-Gehalt von 8,5 % besitzen die Blends schlechtere mechanische und thermische Eigenschaften.

Blends mit üblichen SAN-Polymeren, welche 25 - 35 % Acrylnitril (AN) enthalten, haben dann sehr schlechte mechanische und thermische Eigenschaften.

Wie sich gezeigt hat, lassen sich z.B. SAN/PPE- oder ABS/PPE-Mischungen, welche in den SAN- oder ABS-Komponenten einen Nitrilmonomergehalt von >8 Gew.-% enthalten, nicht in der vorstehend angegebenen Weise, d.h. mit Phosphorverbindungen allein, flammfest ausrüsten.

In (8) schließlich, ist die halogenfreie Ausrüstung von thermoplastischen Kunststoffen, z.B. von SAN bzw. ABS mit Hilfe eines Systems aus einer Stickstoff enthaltenden Verbindung, einem Phenol-Aldehyd-Harz und einer Phosphor enthaltenden organischen Verbindung beschrieben.

Es bestand daher weiterhin die Aufgabe, ein halogenfreies Flammschutzmittelsystem für SAN/PPE bzw. ABS/PPE Mischungen zu entwickeln, bei dem die vorstehend genannten Nachteile nicht auftraten. Dieses halogenfreie Flammschutzmittelsystem sollte das Erreichen der Einstufung UL 94 V1 und UL 94 V0 bewirken und das brennende und auch das nichtbrennende Abtropfen beflammter Formmassen verhindern; gleichzeitig sollte die Transparenz der Formteile erhalten bleiben.

Die Aufgabe wird gelöst durch eine halogenfreie, flammgeschützte, thermoplastische Formmasse gemäß Patentanspruch 1.

Die Erfindung betrifft daher eine halogenfreie, selbstverlöschende thermoplastische Formmasse, enthaltend (vorzugsweise bestehend aus), jeweils bezogen auf die Formmasse aus A, B, C, D, E und F,

A 3 - 97 Gew.-% mindestens eines halogenfreien thermoplastischen Harzes, das, bezogen auf A, einpolymerisiert enthält

$a_1$) 60 bis 91 Gew.-% mindestens eines vinylaromatischen Monomeren mit 8 bis 9 C-Atomen und

$a_2$) 40 bis 9 Gew.-% von (Meth)acrylnitril

gegebenenfalls enthaltend

B bis zu 40 Gew.-% eines Elastomeren mit einer Glastemperatur unterhalb von 0°C, das in Form eines Pfropfmischpolymerisates aus den Monomeren $a_1$) und $a_2$) der Komponente A angewendet wird,

C 97 - 3 Gew.-% eines weiteren halogenfreien thermoplastischen Harzes.

D 0,5 - 40 Gew.-% mindestens einer Phosphor enthaltenden Verbindung (Flammschutzmittel) und

E 4 - 30 Gew.-% mindestens eines Phenol-Aldehyd-Harzes.

Diese Formmasse ist dadurch gekennzeichnet, daß es sich bei der Komponente C um Poly(phenylen)ether handelt und daß die Formmasse ferner

F 0,3 - 95 Gew.-% mindestens eines Copolymerisates aufweist, das aus einer Hauptseite und daran durch Kondensation angefügte Seitenketten besteht,

wobei die Hauptkette ein jeweils massenmittleres Molekulargewicht $\bar{M}_w$ im Bereich von 10 000 bis $10^7$ aufweist und die Seitenketten ein solches von 2000 bis 80000 aufweisen, bestimmt durch Gelpermeationschromatographie, wobei ferner die Hauptkette ein Terpolymerisat darstellt, das einpolymerisiert enthält:

$f_a$) 60 - 91 Gew.-% mindestens eines vinylaromatischen Monomeren mit 8 oder 9 C-Atomen

$f_b$) 40 - 9 Gew.-% Acrylnitril

$f_c$) 0,3 - 10 Gew.-% mindestens eines Monomeren aus der Gruppe der Ester der Acrylsäure und Methacrylsäure, die zur Esterbildung befähigte Alkoholreste enthalten,

und wobei jede Seitengruppe mindestens einen, gegebenenfalls nicht substituierten Poly(phenylen)etherrest, PPE, aufweist, der, jeweils über die Gruppe X, den Rest eines mindestens bifunktionellen Kupplungsmittels, das Polymerisat -X-PPE der Seitengruppe an das (die) zur Esterbildung befähigten Monomere(n) ($f_c$) bindet.

Nachstehend wird der Aufbau der erfindungsgemäßen Formmasse aus den Komponenten und deren Herstellung beschrieben.

Im Aufbau der Formmasse sind die Komponenten (A) bis (F) beteiligt, d.h. die Summe der 6 Komponenten beträgt jeweils 100 %. Jede der Komponenten (A) bis (F) ist an sich bekannt. Neu und erfinderisch ist der Vorschlag, durch die Anwendung von Novolaken (linearen, unvernetzten Phenol/Aldehyd-Herzen), die durch die Zugabe von Phosphorflammschutzmitteln eingetretene Abnahme der Wärmeformbeständigkeikt auszugleichen, ohne daß so vorteilhafte Eigenschaften, wie Selbstverlöschung, das Nichtauftreten von Abtropfen und gute Transparenz verloren gehen.

Die erfindungsgemäße Formmasse besteht zu

1. 3 - 97 Gew.-%, insbesondere 3 - 60 Gew.-% und vorzugsweise 3 - 50 Gew.-% der Komponente (A),

   enthält gegebenenfalls

2. 0 - 40 Gew.-%, insbesondere 0 - 30 Gew.-% und vorzugsweise 0 - 25 Gew.-% der Komponente (B),

3. 97 - 3 Gew.-%, insbesondere 60 - 10 Gew.-% und vorzugsweise 50 - 20 Gew.-% der Komponente (C),

4. 0,3 - 95 Gew.-%, insbesondere 1 - 60 Gew.-% und vorzugsweise 3 - 20 Gew.-% der Komponente (D),

5. 0,5 - 40 Gew.-%, insbesondere 1 - 30 Gew.-% und vorzugsweise 2 - 50 Gew.-% der Komponente (E) und

6. 4 - 30 Gew.-%, insbesondere 6 - 25 Gew.-% und vorzugsweise 8 - 20 Gew.-% der Komponente (F).

<u>Komponente A</u>

Bei der Komponente A der erfindungsgemäßen Formmasse handelt es sich um ein thermoplastisches Harz, das, bezogen auf A, einpolymerisiert enthält:

$a_1$) 60 - 91 % mindestens eines vinylaromatischen Monomeren mit 8 oder 9 C-Atomen

$a_2$) 40 - 9 % mindestens eines ungesättigten Nitrils.

Als Bestandteil ($a_1$) der Komponente (A) kommen Styrol, α-Methylstyrol, p-Methylstyrol oder Gemische davon in Betracht, besonders bevorzugt wird Styrol allein eingesetzt.

Als Bestandteil ($a_2$) der Komponente (A) wird vorzugsweise Acrylnitril (AN) eingesetzt.

Das Styrolcopolymerisat (SAN) wird in bekannter Weise in Lösung, Emulsion oder Masse kontinuierlich oder diskontinuierlich hergestellt. Die Durchschnittsmolekulargewichte (Gewichtsmittel $\bar{M}_w$), bestimmt durch Gelpermeationschromatographie, liegen bevorzugt von 10.000 bis 1 Mio. Falls die Komponente A schlagzäh modifiziert wird, enthält diese die Komponente C, einen Kautschuk, in Form eines Pfropfmischpolymerisates aus den Monomeren $a_1$ und $a_2$ als Pfropfhülle und vorzugsweise Poly(butadien) oder gegebenenfalls vernetzte Poly(acryl)ester oder Copolymere aus Acrylsäure und Butadien oder Copolymere aus überwiegend Butadien und Styrol als Pfropfgrundlage.

Komponente B

Zur Schlagzähmodifizierung der Komponente A der erfindungsgemäßen Formmasse werden Kautschuke [Komponente (B)] eingesetzt.

Der Kautschuk (B) soll eine Glastemperatur [nach K.H. Illers und H. Breuer, Kolloid-Zeitschrift 176, (1961) Seite 110] haben, die unter 0°C liegt. Als Kautschuk kommen beispielsweise in Frage: Polybutadien, Polyacrylate von Estern der Acrylsäure mit 2 bis 8 C-Atomen im Alkoholrest (vgl. DE-OS 14 20 775 und DE-OS 14 95 089) oder Copolymerisate aus überwiegend Butadien und Styrol bzw. solche von Butadien und Estern der Acrylsäure mit 2 bis 8 C-Atomen im Alkoholrest.

Zur Herstellung von schlagzähen Copolymerisaten der Komponente (A) benötigt man gepfropfte Kautschuke, bevorzugt auf Basis Polybutadien. Als solche kommen in Frage Pfropfmischpolymerisate, welche in Anteilen von 5 bis 50 Gew.-%, insbesondere der Monomeren $a_1$ und $a_2$ der Komponente A von 10 bis 45 Gew.-%, jeweils bezogen auf die Komponente (A), angewendet werden.

Diese Pfropfmischpolymerisate sind aufgebaut aus 10 bis 50 Gew.-%, vorzugsweise 15 bis 45 Gew.-%, eines Gemisches aus mindestens einem vinylaromatischen Monomeren $a_1$, das bis 8 oder 9 Kohlenstoffatome enthält, und 0,1 bis 25 Gew.-%, vorzugsweise 5 bis 20 Gew.-%, Acrylnitril $a_2$) als Pfropfhülle, auf 50 bis 90 Gew.-%, insbesondere 50 bis 75 Gew.-%, der elastomeren Pfropfgrundlage (Kautschuk).

Die Herstellung der Pfropfmischpolymerisate (B) ist an sich bekannt. Sie können z.B. hergestellt werden durch Polymerisation eines Gemisches von bevorzugt Styrol und AN in Gegenwart von Polybutadien in Emulsion, wobei in bekannter Weise eine Teilchenvergrößerung vorgenommen werden kann.

Die Komponente (B) kann vor der zur Herstellung der erfindungsgemäßen Formmasse als Matrix enthalten sein.

Als Pfropfkautschuke (B) kommen somit in Frage:

$B_1$: 75 % Polybutadienkautschuk, gepfropft mit 25 % Styrol/Acrylnitril im Verhältnis (90/10);

$B_2$: 75 % Polybutadienkautschuk, gepfropft mit 25 % Styrol/Acrylnitril im Verhältnis (83/17);

$B_3$: 75 % Polybutadienkautschuk, gepfropft mit 25 % Styrol/Acrylnitril im Verhältnis (75/25);

$B_4$: 75 % Polybutadienkautschuk, gepfropft mit 25 % Styrol/Acrylnitril im Verhältnis (70/30);

$B_5$: 75 % eines Kautschuks aus 60 Teilen Acrylsäurebutylester und 40 Teilen Butadien, gepfropft mit 25 % Styrol/Acrylnitril im Verhältnis (70/30);

$B_6$: 75 % Polybutadienkautschuk, gepfropft mit 25 % Styrol/Acrylnitril im Verhältnis (70/30);

$B_7$: 60 % Polybutadienkautschuk, gepfropft mit 40 % Styrol/Acrylnitril im Verhältnis (63/35);

<u>Komponente C</u>

Bei der Komponente (C) der erfindungsgemäßen Formmasse handelt es sich um thermoplastische Poly(phenylen)ether (PPE).

Die Poly(phenylen)ether (PPE) werden nach den bekannten Verfahren aus Phenolen durch oxidative Kupplung hergestellt, wie es z.B. beschrieben ist in den US-Patentschriften 3,306,879, 3,914,266, 3,956,442, 2,965,069, 3,972,851, 3,496,236, 3,367,978 und 4,140,675.

Bevorzugte Poly(phenylen)ether haben die allgemeine Formel (I)

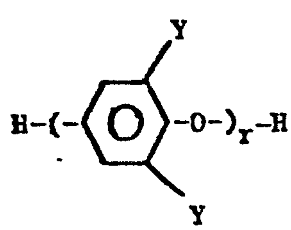

(I)

in der stehen für:
r eine ganze Zahl im Bereich von 20 bis 300, vorzugsweise 30 bis 150, monovalente Substituenten, wie Wasserstoff oder Kohlenwasserstoffreste ohne ein tertiäres Kohlenstoffatomen in alpha-Position, die gegebenenfalls über ein Sauerstoffatom an den Phenylkern gebunden sein können.

Beispielsweise seien genannt: Poly-(2,5-dilauryl-1,4-phenylen)ether, Poly-(1,6-diphenyl-1,4-phenylen)ether, Poly-(2,6-dimethoxi-1,4-phenylen)ether, Poly-(2-methoxi-6-ethoxi-1,4-phenylen)ether, Poly-(2-ethyl-6-stearyloxi-1,4-phenylen)ether, Poly-(2-methyl-6-methyl-6-phenyl-1,4-phenylen)ether, Poly-(2,6-dibenzyl-1,4-phenylen)ether, Poly-(2-ethoxi-1,4-phenylen)ether. Ebenfalls geeignet sind Copolymere von verschiedenen Phenolen, wie 2,6-Dimethylphenol und 2,3,6-Trimethylphenol.

Besonders bevorzugt als Komponente (C) für die Herstellung der erfindungsgemäßen Formmasse sind solche, bei denen beispielsweise y=Alkyl mit 1 bis 4 C-Atomen, wie Poly-(2,6-dimethyl-1,4-phenylen)ether, Poly-(2,6-diethyl-1,4-phenylen)ether, Poly-(2-methyl-6-ethyl-1,4-polyphenylen)ether, Poly-(2-methyl-6-propyl-1,4-polyphenylen)ether, Poly-(2,6-dipropyl-1,4-phenylen)ether und Poly-(2-ethyl-6-propyl-1,4-phenylen)ether.

Die Poly(phenylen)ether (PPE) für die Komponente (C) werden nach den bekannten Verfahren aus Phenolen durch oxidative Kupplung hergestellt, wie es z.B. beschrieben ist in den US-Patentschriften 3,306,879, 3,914,266, 3,956,442, 2,965,069, 3,972,851, 3,496,236, 3,367,978 und 4,140,675.

Komponente D (Flammschutzmittel)

Bei der Komponente (D) handelt es sich um organische und anorganische Phosphor enthaltende Verbindungen, in denen der Phosphor die Wertigkeitsstufe -3 bis +5 besitzt.

Unter der Wertigkeitsstufe soll der Begriff "Oxidationsstufe" verstanden werden, wie er im Lehrbuch der Anorganischen Chemie von A.F. Hollemann und E. Wiberg, Walter de Gruyter und Co. (1964, 57. bis 70. Auflage), Seite 166 bis 177 (21), wiedergegeben ist.

Phosphorverbindung der Wertigkeitsstufen -3 bis +5 leiten sich von Phosphin (-3), Diphosphin (-2), Phosphinoxid (-1), elementarem Phosphor (±0), hypophosphoriger Säure (+1), phosphoriger Säure (+3), Hypodiphosphorsäure (+4) und Phosphorsäure (+5) ab.

Beispiele für Phosphorverbindungen der Phosphin-Klasse, die die Wertigkeitsstufe -3 aufweisen, sind aromatische Phosphine wie Triphenylphosphin, Tritolylphosphin, Trisnonylphosphin, Trinaphthylphosphin u.a. Besonders geeignet ist Triphenylphosphin.

Beispiele für Phosphorverbindungen der Diphosphinklasse, die die Wertigkeitsstufe -2 aufweisen, sind Tetraphenyldiphosphin, Tetranaphthyldiphosphin u.a. Besonders geeignet ist Tetranaphthyldiphosphin.

Phosphinverbindungen der Wertigkeitsstufe -1 leiten sich vom Phosphinoxid ab. Beispiele sind Triphenylphosphinoxid, Tritolylphosphinoxid, Trisnonylphosphinoxid, Trisnaphthylphosphinoxid. Bevorzugt ist Triphenylphosphinoxid.

Phosphor der Wertigkeitsstufe $\pm 0$ ist der elementare Phosphor. In Frage kommen roter und schwarzer Phosphor. Bevorzugt ist roter Phosphor.

Phosphorverbindungen der "Oxidationsstufe" +1 sind z.B. Hypophosphite. Sie können Salzcharakter haben oder rein organischer Natur sein. Die Salze enthalten Kationen der Elemente aus der I., II. und III. Hauptgruppe und der I. bis VIII. Nebengruppe des periodischen Systems (s. Lehrbuch "Anorganische Chemie" von F.A. Cotton, G. Wilkinson, Verlag Chemie (1967) (22)). Beispiele sind Calciumhypophosphit und Magnesiumhypophosphit. Des weiteren kommen Doppelhypophosphite mit der Struktur $CeMe(H_2PO_2)_6$ in Frage, wobei Me = Erbium, Thalium, Ytterbium Lutetium sein kann. Es können auch komplexe Hypophosphite verwendet werden, wie beispielsweise $Me[Zr(H_2PO_2)_6]$, $Me[Hf(H_2PO_2)_6]$, wobei Me = Magnesium, Calcium, Mangan, Cobalt, Nickel, Eisen, Zink und Cadmium sein kann.

Neben diesen anorganischen Hypophosphiten kommen auch organische Hypophosphite in Frage. Geeignet sind z.B. Cellulosehypophosphitester, Polyvinylalkoholhypophosphitester, Ester der hypophosphorigen Säure mit Diolen, wie z.B. von 1,10-Dodecyldiol. Auch substituierte Phosphinsäuren und deren Anhydride, wie z.B. Diphenylphosphinsäure, können eingesetzt werden. Auch Melaminhypophosphit ist geeignet. Des weiteren kommen in Frage Diphenylphosphinsäure, Di-p-Tolylphosphinsäure, Di-Kresylphosphinsäureanhydrid, Naphthylphenylphosphinsäureanhydrid oder Phenylmethylphosphinsäureanhydrid. Es kommen aber auch Verbindungen wie Hydrochinon-, Ethylenglykol-, Propylenglykol-bis(diphenylphosphinsäure)ester u.a. in Frage. Ferner sind geeignet Aryl(Alkyl)phosphinsäureamide, wie z.B. Diphenylphosphinsäure-dimethylamid und Sulfonamidoaryl(alkyl)phosphinsäurederivate, wie z.B. p-Tolylsulfonamidodiphenylphosphinsäure. Bevorzugt eingesetzt werden Hydrochinon- und Ethylenglykol-bis-(diphenylphosphinsäure)ester.

Phosphorverbindungen der Oxidationsstufe +3 leiten sich von der phosphorigen Säure ab. Beispiele sind in US-PS 3,090,799 und 3,141,032 beschrieben. Besonders geeignet sind cyclische Phosphonate wie z.B.

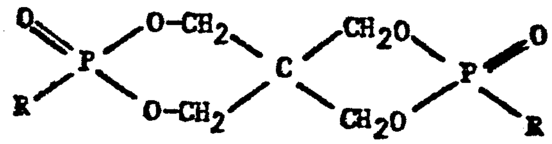

mit R = $CH_3$ und $C_6H_5$, die sich vom Pentaerythrit ableiten,

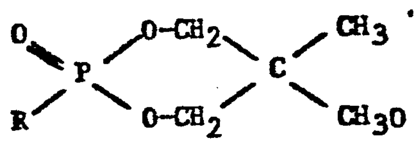

mit R = $CH_3$ und $C_6H_5$, die sich vom Neopentylglykol ableiten und

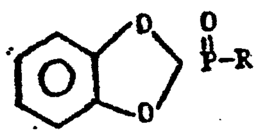

mit R = $CH_3$ und $C_6H_5$, die sich vom Brenzkatechin ableiten.

Ferner ist Phosphor der Wertigkeitsstufe +3 in Triaryl(alkyl)phosphiten, wie Triphenylphosphit, Tris(nonylphenyl)phosphit, Tris(2,4-di-tert.-butylphenyl)phosphit oder Phenyldidecylphosphit u.a. enthalten. Es können aber auch Diphosphite, wie z.B. Propylenglykol-1,2-bis(diphosphit) oder cyclische Phosphite, wie

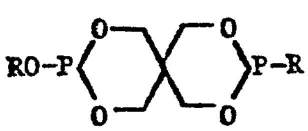

R = $CH_3$ und $C_6H_5$, die sich vom Pentaerythrit ableiten,

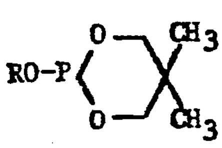

mit R = $CH_3$ und $C_6H_5$, die sich vom Neopentylglykol ableiten und

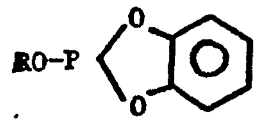

mit R = $CH_3$ und $C_6H_5$, die sich vom Brenzkatechin ableiten, in Frage.

Ganz besonders bevorzugt werden Methylneopentylphosphonat und -phosphit sowie Dimethylpentaerythritdiphosphonat und -phosphit.

Als Phosphorverbindungen der Oxidationsstufe +4 kommen vor allem Hypodiphosphate, wie z.B. Tetraphenylhypodiphosphat oder

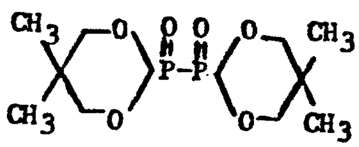

Bisneopentylhypodiphosphat

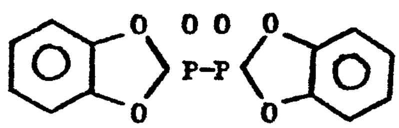

Bisbrenzkatechinhypodiphosphat

in Betracht. Bevorzugt wird Bisneopentylhypodiphosphat.

Als Phosphorverbindungen der Oxidationsstufe +5 kommen vor allem alkyl- und arylsubstituierte Phosphate in Betracht. Beispiele sind Phenylbisdodecylphosphat, Phenylneopentylphosphat, Phenylethylenhydrogenphosphat, Phenyl-bis(3,5,5-trimethylhexyl)phosphat, Ethyldiphenylphosphat, 2-Ethylhexyldi(tolyl)phosphat, Diphenylhydrogenphosphat, Bis(2-ethylhexyl)-p-tolylphosphat, Tritolylphosphat, Bis(2-ethylhexyl)-p-tolylphosphat, Tritolylphosphat, Bis(2-ethylhexyl)phenylphosphat, Di(nonyl)phenylphosphat, Phenylmethylhydrogenphosphat, Di(dodecyl)-p-tolylphosphat, Tricresylphosphat, Triphenylphosphat, Dibutylphenylphosphat, p-Tolyl-bis(2,5,5-trimethylhexyl)phosphat, 2-Ethylhexyldiphenylphosphat. Besonders geeignet sind Phosphorverbindungen, bei denen jeder Rest ein Aryloxi-Rest ist. Ganz besonders geeignet ist dabei Triphenylphosphat.

Des weiteren können auch cyclische Phosphate eingesetzt werden. Besonders geeignet ist hierbei Diphenylpentaerythritdiphosphat und Phenylneopentylphosphat.

Außer den oben angeführten niedermolekularen Phosphorverbindungen kommen noch oligomere und polymere Phosphorverbindungen in Frage.

Solche polymere, organische Phosphorverbindungen mit Phosphor in der Polymerkette entstehen beispielsweise bei der Herstellung von pentacyclischen, ungesättigten Phosphindihalogeniden, wie es beispielsweise in der DE-OS 20 36 174 beschrieben ist. Das Molekulargewicht, gemessen durch Dampfdruckosmometrie in Dimethylformamid, der Polyphospholinoxide soll im Bereich von 500 bis 7000, vorzugsweise im Bereich von 700 bis 2000 liegen.

Der Phosphor besitzt hierbei die Oxidationsstufe -1.

Ferner können anorganische Koordinationspolymere von Aryl(Alkyl)phosphinsäuren, wie z.B. Poly[natrium(I)-methylphenylphosphinat], Poly[Zn(II)-dibutyl-co-dioctylphosphinat], Poly[Al(III)-tris(diphenyl)phosphinat] oder Poly[Co(II)-Zn(II)-bis(dioctyl)phosphinat], eingesetzt werden. Ihre Herstellung wird in DE-OS 31 40 520 (26) angegeben. Der Phosphor besitzt die Oxidationszahl +1.

Weiterhin können solche polymeren Phosphorverbindungen durch die Reaktion eines Phosphonsäurechlorids, wie z.B. Phenyl-, Methyl-, Propyl-, Styryl- und Vinylphosphonsäuredichlorid mit bifunktionellen Phenolen, wie z.B. Hydrochinon, Resorcin, 2,3,5-Trimethylhydrochinon, Bisphenol-A, Tetramethylbisphenol-A oder 1,4'-Dihydroxy-diphenylsulfon entstehen (vgl. US 3,719,272 und W. Sørensen und T.W. Champbell, "präparative Methoden der Polymeren-Chemie", Verlag Chemie, Weinheim, 1962, 123). Die inhärenten Viskositäten dieser Polymere sollen in einem Bereich von

$$\frac{\ln \eta_{rel}}{c} = 0{,}01 \text{ bis } 0{,}4,$$

vorzugsweise im Bereich von

$$\frac{\ln \eta_{rel}}{c} = 0{,}03 \text{ bis } 0{,}2,$$

liegen.

Weitere polymere Phosphorverbindungen, die in den erfindungsgemäßen Polymerisationen enthalten sein können, werden durch Reaktion von Phosphoroxidtrichlorid oder Phosphorsäureesterdichloriden mit einem Gemisch aus mono-, bi- und trifunktionellen Phenolen und anderen Hydroxylgruppen tragenden Verbindungen hergestellt (vgl. Houben-Weyl-Müller, Thieme-Verlag Stuttgart, Org. Phosphorverbindungen, Teil II (1963). Ferner können polymere Phosphonate durch Umesterungsreaktionen von Phosphonsäureestern mit bifunktionellen Phenolen (vgl. DE-OS 29 25 208) oder durch Reaktionen von Phosphonsäureestern mit Diaminen oder Diamiden oder Hydraziden (vgl. US-PS 4,403,075) hergestellt werden. In Frage kommt aber auch das anorganische Poly(ammoniumphosphat).

Es können aber auch oligomere Pentaerythritphosphite, -phosphate und -phosphonate gemäß EP-PS 8 486 der allgemeinen Formeln II, III, IV angewendet werden:

II 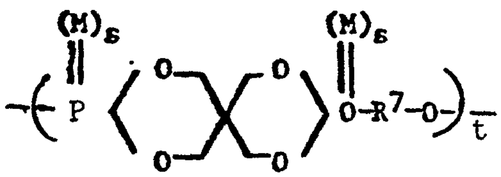 mit s = 0 oder 1 und
t = 2 bis 500
y = 0,5
M = 0,5

III 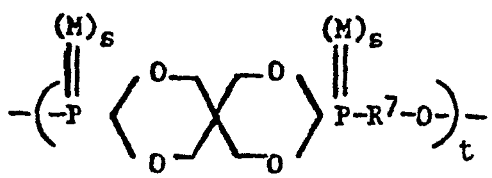 mit s = 0 oder 1 und
t = 2 bis 500
y = 0,5
M = 0,5

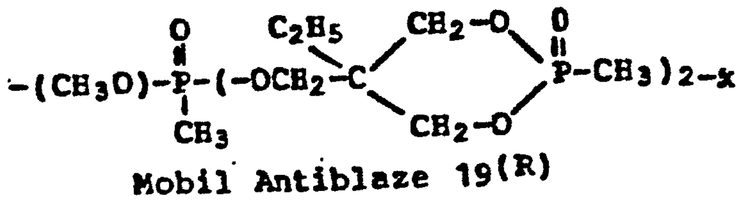

mit x = 0 oder 1,

Mobil Antiblaze 19(R)

worin $R^7 = -(-CH_2-)-_2$
$-(-CH_2-)-_3$

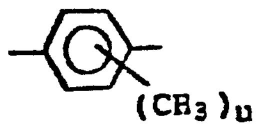

mit u = 0 bis 4,

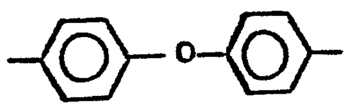

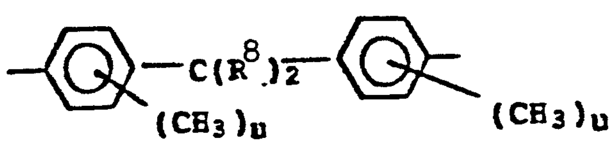

mit u = 0 bis 4
und $R^8$ = $C_1$- bis $C_4$-Alkyl oder H,

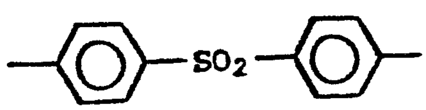

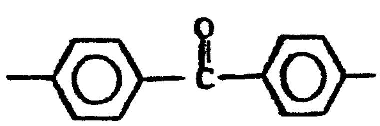

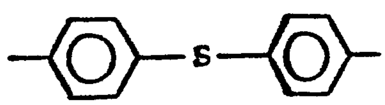

Die Aufzählung dient der Illustration der Erfindung und beinhaltet keine Einschränkung.

Ganz besonders bevorzugt zum Einsatz gelangen Triphenylphosphinoxid, Triphenylphosphat, Dimethylpentaerythritdiphosphonat und Methylneopentylphosphat und Mobil Antiblaze 19(R).

Komponente E

Bei der Komponente E der erfindungsgemäßen Formmasse handelt es sich um Phenol/Aldehydharze, welche bekanntermaßen durch die Kondensation von Phenolen und Aldehyden hergestellt werden können. Besonders bevorzugt eingesetzt werden Novolake(R) mit zahlenmittleren Molgewichten $\bar{M}_n$ von 500 bis 2000.

Ihre Darstellung wird beispielsweise in Houben-Weyl, "Methoden der organischen Chemie", Band 14, Teilband 2, Georg Thieme Verlag, Stuttgart, 1963, Seite 201 ff. oder in Sørensen und Champbell, "Preparative Methods of Polymer Chemistry", Interscience Publishers, New York, 1968 und thermodynamische Eigenschaften von Novolak/Polymermischung von Fahrenholtz und Kwei in Macromolecules, Band 14, Seiten 1076 bis 1079 (1981), beschrieben.

Zur Darstellung von Novolaken eignen sich Aldehyde ($e_1$) der allgemeinen Formel (V)

$$R^1\text{-CHO} \qquad (V)$$

worin $R^1$ = H, $C_1$-$C_{10}$-Alkyl, Cycloalkyl, oder $C_6$-$C_{12}$-Aryl oder -Aryl-$C_1$-$C_3$-Alkyl. Genannt seien beispielsweise Formaldehyd, Acetaldehyd, p-Propanal, n-Butanal, i-Propanal, i-Butyraldehyd, 3-Methyl-n-butanal, Benzaldehyd, p-Tolylaldehyd, 2-Phenylacetaldehyd, u.a. Besonders bevorzugt eingesetzt wird Formaldehyd.

Geeignet sind Phenole ($e_2$) der allgemeinen Formel (VI)

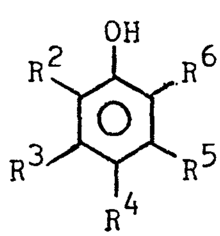

(VI),

worin $R^2$ und $R^6$ Wasserstoffatome bezeichnen und $R^3$, $R^4$ und $R^5$ wahlweise gleich Wasserstoff- oder $C_1$-$C_{20}$-Alkyl-, Cycloalkyl, $C_6$-$C_{10}$-Aryl-, $C_1$-$C_6$-Alkoxid, Cycloalkoxi-, $C_6$-$C_{10}$-Phenoxi-, Hydroxi-, Carbonyl-, Carboxi-, Cyano-, $C_1$-$C_6$-Alkylester-, $C_6$-$C_{10}$-Arylester-, Sulfonsäure-, Sulfonsäureamid-, $C_1$-$C_6$-Sulfonsäurealkylester-, $C_6$-$C_{10}$-Sulfonsäureester-, $C_1$-$C_6$-Alkyl- oder $C_6$-$C_{10}$-Arylphosphinsäure- und ihren $C_1$-$C_6$-Alkyl- oder $C_6$-$C_{10}$-Arylester, Phosphonsäure- und ihren Mono- und Di-$C_1$-$C_6$-Alkyl- oder -$C_6$-$C_{10}$-Arylestern oder -Aryl-$C_1$-$C_6$-Alkyl-Reste sein können, oder worin $R^2$ und $R^4$ Wasserstoffatome bezeichnen und $R^3$, $R^5$ und $R^6$ gleich den oben genannten Resten sein können.

Chakteristische Beispiele für ($e_2$) sind, ohne damit eine Einschränkung zu treffen, Phenol, o-Kresol, m-Kresol, p-Kresol, 2,5-Dimethyl-, 3,5-Dimethyl-, 2,3,5-Trimethyl-, 3,4,5-Trimethyl-, p-t-Butyl-, p-n-Octyl-, p-Stearyl-, p-Phenyl-, p-(2-Phenylethyl)-, o-Isopropyl-, p-Isopropyl-, m-Isopropyl-, p-Methoxi- und p-Phenoxiphenol, Brenzkatechin, Resorcin, Hydrochinon, Salicylaldehyd, Salicylsäure, p-Hydroxibenzoesäure, p-Hydroxibenzoesäure, p-Hydroxibenzoesäuremethylester, p-Cyano- und o--Cyanophenol, p-Hydroxibenzolsulfonsäure, -sulfonsäureamid und -phenylphosphinsäuremethylester, 4-Hydroxiphenylphosphonsäure, -phosphonsäureethylester und -phosphhonsäurediphenylester sowie zahlreiche andere Phenole. Bevorzugt eingesetzt werden Phenol, o-Kresol, m-Kresol, p-Kresol, p-t-Butylphenol und o-t-Butylphenol und p-Octylphenol.

Es können aber auch Gemische aus diesen Phenolen eingesetzt werden.

Bevorzugt eingesetzte Novolake (E) sind demnach, ohne damit eine Einschränkung zu treffen:

$E_1$: Phenol/Formaldehyd-Novolak,
$E_2$: o-Kresol/Formaldehyd-Novolak,
$E_3$: m-Kresol/Formaldehyd-Novolak,
$E_4$: t-Butylphenol/Formaldehyd-Novolak,
$E_5$: p-Octgylphenol/Formaldehyd-Novolak,
$E_6$: p-Cyanophenol/Formaldehyd-Novolak.

Besonders bevorzugt eingesetzt wird $E_5$.

Beispiele für bevorzugt eingesetzte Novolake aus Gemischen von Phenolen ($e_2$) sind in der Tabelle 1 aufgeführt. Diese Aufzählung soll keine Einschränkung beinhalten.

Die Zusammensetzung der Mischungen der Phenole ist nicht kritisch und kann innerhalb der angegebenen Grenzen variieren. Es gilt für die Berechnung der Zusammensetzung:

$$\sum \text{Mol. \%} = 100$$

Bevorzugt eingesetzt werden $E_{11}$ und $E_{15}$. Ganz besonders bevorzugt eingesetzt werden die Formaldehyd-Novalake $E_{11}$ und $E_{15}$ der Zusammensetzung:

60 - 70 Mol.-% o-Kresol + 15 - 20 Mol.-% m-Kresol + 10 - 20 Mol.-% p-t-Butylphenol oder p-Kresol.

Tabelle 1

Beispiele für bevorzugt eingesetzte Phenolgemische

| Bezeichnung | Hauptkomponenten | Nebenkomponenten o-Kresol (Mol.-%) | m-Kresol (Mol.-%) | p-Kresol (Mol.-%) | p-t-Butylphenol (Mol.-%) | o-t-Butylphenol (Mol.-%) |
|---|---|---|---|---|---|---|
| $E_7$ | Phenol | (10-40) | - | - | ( 2-15) | - |
| $E_8$ | Phenol | (10-20) | (30-40) | - | - | ( 5-10) |
| $E_9$ | Phenol | (10-40) | (15-20) | - | ( 2-10) | ( 1- 3) |
| $E_{10}$ | o-Kresol | - | (35-45) | - | - | - |
| $E_{11}$ | o-Kresol | - | ( 5-30) | - | ( 5-30) | - |
| $E_{12}$ | o-Kresol | - | - | - | - | ( 5-40) |
| $E_{13}$ | o-Kresol | - | (15-20) | - | (10-20) | - |
| $E_{14}$ | o-Kresol | - | (15-20) | - | ( 5-15) | ( 2-10) |
| $E_{15}$ | o-Kresol | - | ( 5-30) | ( 5-30) | - | - |

Komponente F

Bei der Komponente F handelt es sich um Copolymerisate, die aus einer Hauptkette und mindestens einer daran durch Kondensation angefügten Seitenkette bestehen.

Schema

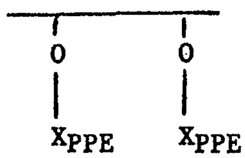

Hauptkette

Seitenketten

Die Verknüpfung von Haupt- und Seitenketten erfolgt über Monomere besonderer Art, die in der Hauptkette einpolymerisiert sind und die eine Seitengruppe tragen, die verethert werden kann. Z.B. werden bevorzugt Hydroxylgruppen aufweisende Monomere, so daß nach der Kondensation der Rest -X- eines bifunktionellen Kupplungsmittels an die die Seitengruppe repräsentierenden Poly(phenylen)ether, PPE, (als Gesamtgruppe -XPPE) in der Form -O-X-PPE gebunden ist.

Die Hauptkette des Copolymerisats ist ein Terpolymerisat, das das Hydroxylgruppen enthaltende Monomer einpolymerisiert enthält, jeweils bezogen auf die Hauptkette,

$f_a$: 91 - 60 Gew.-% mindestens eines monovinylaromatischen Monomeren mit 8 oder 9 C-Atomen

$f_b$: 9 - 40 Gew.-% Acrylnitril

$f_c$: 0,3 - 10 Gew.-% mindestens eines Monomeren aus der Gruppe der Ester, der Acryl- und Methacrylsäure, die zur Etherbildung befähigte Hydroxylgruppe enthalten.

Als Monomere $f_a$ kommen Styrol oder kern- bzw. seitenkettenalkylierte Vertreter, wie p-Methylstyrol bzw. α-Methylstyrol, oder Mischungen daraus in Betracht. Bevorzugt wird Styrol allein angewendet.

Als Monomere $f_c$, für die Herstellung der Verbindung zu den Seitenketten werden vorzugsweise Hydroxialkyl-(meth)acrylate und -(meth)acrylamide verwendet. Besonders geeignet sind Hydroxiethyl(meth)acrylat, Hydroxipropyl-(meth)acrylat, Hydroxibutyl-(meth)acrylat, Hydroxipentyl-(meth)-acrylat, Hydroxihexyl-(meth)acrylat, Hydroxidecyl-(meth)acrylat, Diethylenglykolmono-(meth)acrylat, Triethylenglykolmono-(meth)acrylat, Tetraethylenglykolmono-(meth)-acrylat, Dipropylenglykolmono-(meth)-acrylat, Tripropylenglykolmono-(meth)acrylat, außerdem Hydroximethylstyrol. Es können auch Gemische eingesetzt werden.

Das massenmittlere Molekulargewicht $M_w$ der Hauptkette des Copolymeren beträgt 5 000 bis 5 Mio., insbesondere 20 000 bis 1 000 000, bestimmt durch Gelpermeationschromatographie. Das Gesamtmolekulargewicht beträgt 7 000 bis 10 Millionen.

Das Copolymerisat F besteht zu 20 - 85 Gew.-%, vorzugsweise 40- bis 75 Gew.-% aus der Hauptkette, demzufolge machen die Seitenketten 15 - 80 Gew.-%, insbesondere 25 - 60 Gew.-% aus. (Der Rest des Kopplungsmittels ist hierbei vernachlässigt)

Das im Copolymerisat F in den Nebenketten enthaltende PPE ist vorzugsweise der Poly(2,6-dimethyl-1,4-phenylen)-ether der Formel I (vgl. Komponente C; Y = $CH_3$, und die dort genannten Verfahren zu seiner Herstellung). Der bevorzugte Polymerisationsgrad des PPE liegt bei n = 20 - 200, besonders bei n = 30 - 100, was einer intrinsischen Viskosität [$\eta$] von 0,5 - 0,63 dl/g entspricht (gemessen in Chloroform).

Bei der Gruppe X handelt es sich um einen Rest eines mindestens bifunktionellen Kopplungsmittels aus einer organischen oder anorganischen Verbindung.

Beispielhaft für bevorzugte Kopplungsmittel seien genannt: Adipinsäuredichlorid, Terephthalsäuredichlorid, Trimesoyldichlorid, Trimellitsäuredichlorid, Oxalsäuredichlorid, Pimelinsäuredichlorid, Glutarsäuredichlorid, Benzophenontetracarbonsäuredichlorid, Oxidiacetyldichlorid, Oxibenzoyldichlorid, Sebacinsäuredichlorid und Azealinsäuredichlorid, außerdem Phosgen. Andere bevorzugte Kopplungsmittel sind Phosphor oder Schwefel enthaltende Säurehalogenide wie Sulfuryldichlorid, Phosphoroxidtrichlorid, Alkyl-, Aryl- und Arylalkylphosphordichloride. Besonders geeignet sind auch Silicium oder Bor enthaltende Säurechloride, beispielhaft seien genannt Dikalkyl-, -aryl- und alkylaryldichlorsilane, Dialkoxi-, -aryloxi- oder -arylalkyloxidichlorsilane, Methyltrichlorsilan, Ethyltrichlorsilan, Amyltrichlorsilan, Vinyltrichlorsilan. Die Kopplungsmittel können auch in Gemischen eingesetzt werden.

Besonders bevorzugte Gruppen X sind demnach Gruppen, wie beispielsweise

Alkyl-Si-Alkyl, Aryl-Si-Aryl oder Alkyl-O-Si-O-Alkyl.

Die Aufzählung dient der Illustration und beinhaltet keine Einschränkung.

An das Kopplungsmittel ist, über ein endständiges Sauerstoffatom, ein gegebenenfalls nichtsubstituierter Poly(phenylen)etherrest (PPE) gebunden. Dieser Poly(phenylen)etherrest der Seitenkette hat bevorzugt die Formel I, wie für Komponente C, wobei x bevorzugt eine ganze Zahl von 20 bis 200 ist.

Die Zusammensetzung der Hauptkette des Copolymers F wird bevorzugt an die Zusammensetzung des Styrolcopolymeren Komponente A angepaßt. So ist es vorteilhaft, bei hohen (z.B. 20 - 40 Gew.-%) Gehalten an Acrylnitril der Komponente A auch den Gehalt an Acrylnitril in der Hauptkette des Copolymerisates F ähnlich hoch zu wählen.

Die Herstellung der Haupt- und Nebenkette des Copolymeren F ist an sich bekannt.

Zur Herstellung der Komponente F werden die Terpolymeren der Hauptkette mit Poly(phenylen)ethern (PPE) umgesetzt. Dies geschieht in an sich bekannter Weise durch die in der organischen Chemie üblichen Kopplungsreaktionen für OH-Gruppen, wobei vorzugsweise das PPE erst mit bekannten Kopplungsmitteln und anschließend mit dem Terpolymeren der Hauptkette umgesetzt wird. Die Kopplungsmittel reagieren mit der phenolischen Endgruppe und/oder gegebenenfalls mit $-CH_2OH$-Gruppen, die bei der Herstellung des PPE aus Methylgruppen am aromatischen Ring in untergeordneten Mengen entstehen können, am aromatischen Ring des PPE und haben danach noch eine weitere funktionale Gruppe, um mit de0 Terpolymeren zu reagieren. Die Kopplungsreaktion kann in Lösung, Suspension, Schmelze oder Mehrphasenreaktion, wie z.B. Zweiphasenreaktion, bevorzugt mit alkalischem Medium durchgeführt werden. Als Kopplungsmittel eignen sich solche, die sich mit der phenolischen Endgruppe des PPE und mit der Hydroxylgruppe des Terpolymeren umsetzen.

Die Kopplungsmittel werden vorzugsweise zuerst mit dem PPE umgesetzt, wobei sie bevorzugt mit der terminalen -OH-Gruppe des PPE reagieren. Dazu werden bevorzugt alle -OH-Gruppen des PPE umgesetzt, um das PPE mit dem Kopplungsmittel zu funktionalisieren. Die Menge -OH-Gruppen im PPE, welche im allgemeinen eine breite Molekulargewichtsverteilung hat, werden auf bekanntem Weg bestimmt, wie z.B. durch IR-Spektroskopie bei 3 460 $cm^{-1}$ oder durch Titration mit Butyllithium, wobei der Endpunkt durch Zusatz von monomerem Styrol und Bildung von Styrolanion bestimmt wird. Die Menge an Kopplungsmittel wird so bemessen, daß vorzugsweise alle OH-Gruppen funktionalisiert werden.

Die vorstehend beschriebene Reaktion wird vorzugsweise in einem nichtreagierenden Lösungsmittel durchgeführt, wie Cyclohexan, Toluol, Tetrahydrofuran. Es ist auch möglich, in einer Zweiphasenreaktion zu arbeiten. Die entstehende Halogenwasserstoffsäure wird entfernt, entweder durch Austreiben oder durch Zusatz eines basischen Materials, vorzugsweise eines tertiären Amins. Diese Reaktion kann bevorzugt zwischen 0 und 150°C durchgeführt werden. Die Reaktionstemperatur wird nach Basenstärke und Siedepunkt des Lösungsmittels eingestellt.

Das erhaltene, funktionalisierte PPE kann durch Filtrieren und Entfernen des Lösungsmittels aufgearbeitet werden. Es wird mit den hydroxylgruppentragenden Terpolymeren in Lösung, Suspension, Schmelze oder Mehrphasenreaktion, wie Zweiphasenreaktion umgesetzt. Dabei wird vorzugsweise wie beim ersten Schritt umgesetzt, wobei das funktionalisierte PPE-Polymere dem hydroxygruppenhaltigen Terpolymeren auf einmal oder bevorzugt in bis zu 2 Stunden zugegeben wird. Die entstehende Halogenwasserstoffsäure wird ausgetrieben oder durch eine basische Substanz gebunden, bekannt ist z.B. die Verwendung eines tertiären Amins. Es können aber auch andere, säurebindende Substanzen eingesetzt werden. Gegebenenfalls werden die erhaltenen Pfropfcopolymeren durch Abdampfen des Lösungsmittels oder durch Fällen in Methanol gewonnen.

Zusatzstoffe

Die erfindungsgemäße Formmasse kann gegebenenfalls übliche Zusatzstoffe enthalten. Als Zusatzstoffe kommen bekannte und bewährte Stabilisatoren, wie sterisch gehinderte Phenole und organische Phosphite in Betracht, die in üblichen Mengen von jeweils 0,01 bis 0,5 Gew.-%, bezogen auf die erfindungsgemäße Formmasse, eingesetzt werden. Ferner können Schwefel und/oder Schwefel enthaltende Stabilisatoren, wie Dithiocarbamatkomplexe, Xanthogensäuresalz, Thiazole und Zinksalze von Mercaptobenzimidazolen in üblichen Mengen von jeweils 0,01 bis 0,5 Gew.-%, bezogen auf die Gesamtmischung, eingesetzt werden.

Die erfindungsgemäße Formmasse kann außerdem Weichmacher und Verarbeitungshilfsmittel enthalten. Andere bekannte Zusätze sind Glasfasern, Glaskugeln, Kaolin, Quarz, Glimmer, Wollastonit, Talkum, Asbest, Titandioxid, Aluminiumoxid, Micovit, Kreide, calciniertes Aluminiumsilikat, Farbstoffe und Pigmente.

Die Herstellung der erfindungsgemäßen Formmasse aus den Komponenten sowie den eventuell zu verwendenden Zusatzstoffen kann nach geeigneten und bekannten Mischverfahren, z.B. in Extrudern, Knetern oder Walzen erfolgen.

Insbesondere können die Komponenten B, F, D und E der erfindungsgemäßen Formmasse getrennt in Form von Pulvern oder in Form einer pulverisierten Mischung oder als Konzentrat in einem der Thermoplasten (vorzugsweise Komponente A) in den anderen Thermoplasten (Komponente C) eingearbeitet werden, um die beabsichtigte Zusammensetzung zu erzielen.

Die erfindungsgemäßen Formmassen können durch Spritzgießen oder Strangpressen zu selbstverlöschenden Formkörpern oder Profilen verarbeitet werden.

Die erfindungsgemäßen Formmassen zeichnen sich außer durch ihre Eigenschaften der Selbstverlöschung, der verbesserten Wärmeformbeständigkeit, der guten Transparenz und dem Nichtauftreten von Abtropfen beim Brennen auch noch durch gute mechanische Eigenschaften aus. Durch den hohen Acrylnitrilgehalt, der bei den erfindungsgemäßen Einstellungen verwendet werden kann, ist ferner eine verbesserte Lösungsmittelbeständigkeit gegenüber Abmischungen aus PPE und HIPS offensichtlich.

Überraschend und auch nicht vorhersehbar war, daß z.B. durch die Anwendung von Komponente E die Menge an zum Erreichen der Einstufung UL 94 V0 oder UL 94 V1 notwendigen Phosphorverbindungen (Komponente D) abgesenkt werden konnte.

Die in den Beispielen und Vergleichsversuchen erwähnten Brandtests wurden wie folgt durchgeführt:

1. Die Flammschutzprüfung erfolgt im vertikalen Brandtest nach den Vorschriften der Unterwriter Laboratories zwecks Einordnung in eine der Brandklassen UL 94 V0, V1 oder V2.

   Die Einstufung eines flammgeschützten Thermoplasten in die Brandklasse UL 94 V0 erfolgt, wenn folgende Kriterien erfüllt sind: Bei einem Satz von 5 Proben der Abmessungen 127 x 12,7 x 3,16 mm dürfen alle Proben nach zweimaliger Beflammung von 10 Sek. Zeitdauer mit einer offenen Flamme (Höhe 19 mm) nicht länger als 10 Sek. nachbrennen. Die Summe der Nachbrennzeiten bei 10 Beflammungen von 5 Proben darf nicht größer sein als 50 Sek. Es darf kein brennendes Abtropfen, vollständiges Abbrennen oder ein Nachglühen von länger als 30 Sek. erfolgen. Die Einstufung in die Brandklasse UL 94 V1 erfordert, daß die Nachbrennzeiten nicht länger als 30 Sek. sind und daß die Summe der Nachbrennzeiten von 10 Beflammungen von 5 Proben nicht größer als 250 Sek. ist. Das Nachglühen darf nie länger als 60 Sek. dauern. Die übrigen Kriterien sind identisch mit den oben erwähnten. Eine Ein

0176775

stufung in die Brandklasse UL 94 V2 erfolgt dann, wenn es bei Erfüllung der übrigen Kriterien zur Einstufung UL 94 V1 zu brennendem Abtropfen kommt.

2. Die Wärmeformbeständigkeit, Vicat B, wurde nach DIN 53 460 bestimmt. Die Angaben bedeuten °C.

3. Die Transparenz von Teststäbchen wurde visuell beurteilt und wie folgt benotet: sehr gut, gut, mäßig, schlecht.

Für die Durchführung von Versuchen wurden die nachstehend beschriebenen Stoffe hergestellt bzw. verwendet.

Komponente A

$A_1$: Styrol-Acrylnitril-Copolymerisat (= SAN) mit 25 Gew.-% AN; Viskositätszahl VZ = 101 (alle VZ-Angaben beziehen sich auf Werte, die in 0,5 %iger Lösung in Dimethylformamid bei 25°C gemessen wurden).

$A_2$: SAN mit 35 % Acrylnitril; VZ = 80.

Komponente B

$B_7$: 60 % Poly(butadien)kautschuk, gepfropft mit 40 % Styrol/Acrylnitril im Verhältnis (65/35).

Komponente C

$C_1$: Poly(2,6-dimethylen-1,4-phenylen)ether, [hergestellt nach US-PS 3,914,266 (8)] Grenzviskosität $[\eta]$ = 0,60, gemessen bei 25°C in Chloroform.

Komponente D

$D_1$-$D_3$:
Die erfindungsgemäß eingesetzten Flammschutzmittel Triphenylphosphinoxid, Triphenylphosphat und Mobil Antiblaze waren handelsübliche Produkte.

$D_4$: Methylphosphonsäureneopentylester

1,240 kg (= 10 Mol) Dimethylphosphonat werden mit 1,040 kg (= 10 Mol) Neopentylglykol und 0,0495 kg $MgCl_2$ aufgeschmolzen und so lange bei 180 bis 190°C gerührt, bis kein Methanol mehr abdestilliert (ca. 10 bis 16 Stunden).

Ausbeute (lt. Gaschromatographie): 90 %
Festpunkt: 121 - 123°C
Eigenschaften: weiße kristalline Substanz, geruchfrei.

$D_5$: Dimethylpentaerythritdiphosphonat

Die Synthese der Verbindung erfolgt nach GB-PS 2 083 042.

Fp.: 236 - 242°C;

In der Tabelle werden folgende Abkürzungen verwendet:

| | | |
|---|---|---|
| Triphenylphosphinoxid | = | $D_1$ |
| Triphenylphosphat | = | $D_2$ |
| Mobil Antiblaze 19(R) | = | $D_3$ |
| Methylphosphonsäureneopentylester | = | $D_4$ |
| Dimethylpentaerythritdiphosphonat | = | $D_5$ |

Komponente E

$E_{11}$: gemischter Novolak

11,34 kg o-Kresol, 2,754 kg m-Kresol und 2,925 kg p-t-Butylphenol, 5,392 kg Formalin (37 %ig in Wasser), 314 g Oxalsäure x 2 $H_2O$ und 540 g $CH_3OH$ werden in 30 l Wasser gemischt und 24 Stunden bei 95 - 97°C gerührt. Nach 24 Stunden wird die obere wäßrige Phase abgehebert und die untere Phase mit 10 l Wasser gewaschen. Die untere, produkthaltige Phase wird abgelassen und die Lösungsmittel und 1 Teil der leichtflüchtigen Phenole im Wasserstrahlvakuum abgezogen. Die verbleibende Schmelze wird bei 150°C und 0,2 - 0,4 mbar vom restlichem Phenol befreit. Die Schmelze wird auf einem Blech abgekühlt, zerkleinert und gemahlen.
Ausbeute: 10,3 kg
Analyse: C 80,0 %, H 4,7 %, O 13,3 %
Molgewicht (dampfdruckosmometrisch in Aceton): 700;

0176775

$E_{15}$: gemischter Novolak

Der Novolak ($E_{15}$) wird nach analoger Vorschrift aus 63,18 kg p-Kresol, 82,62 kg m-Kresol, 340,2 kg o-Kresol und 320,4 kg Formalin (40 %ig in Wasser) unter Zusatz von 10 kg Oxalsäure und 35 kg $CH_3OH$ hergestellt.
Ausbeute: 400 kg
Molgewicht (dampfdruckosmometrisch in Aceton): 1000;

Komponente F

$F_1$: 100 g PPE (hergestellt gemäß US-PAT 39 14 266, mit einer Grenzviskosität von = 0,60 Dimensionen [ml/g], gemessen bei 25°C im Chloroform) werden mit Dimethyldichlorsilan in Toluol unter Verwendung von Tributylamin als Säurefänger umgesetzt. Das Umsetzungsprodukt wird anschließend zu 100 g eines Styrolcopolymerisats (bestehend aus 72 Gew.-% Styrol, 25 % Acrylnitril und 3 Gew.-% Hydroxibutylacrylat, mit einem $\bar{M}_w$ = 60.000, hergestellt durch kontinuierliche Polymerisation) in Toluol unter Verwendung von Tributylamin als Säurefänger in 20 Min. zulaufen lassen. Man erhält das Pfropfpolymere (Copolymere aus Haupt- und Seitenketten) durch Entfernen des Lösungsmittels.

$F_2$: 100 g PPE (gemäß $F_1$) werden mit Dimethyldichlorsilan umgesetzt. Das Umsetzungsprodukt wird anschließend zu 120 g eines Styrolcopolymerisats (gemäß $F_1$), in Toluol zulaufen lassen. Das erhaltene Copolymere ($F_2$) wird zur Herstellung der erfindungsgemäßen Abmischungen benutzt.

$F_3$: 100 g PPE (gemäß $F_1$) werden mit Dimethyldichlorsilan in Toluol umgesetzt. Das Umsetzungsprodukt wird anschließend zu 100 g eines Styrolcopolymerisats (berechnet aus 62 Gew.-% Styrol, 35 % Acrylnitril und 3 Gew.-% Hydroxybutylacrylat, mit einem $\bar{M}_w$ = 60.000, hergestellt durch kontinuierliche Polymerisation) zugegeben. Man erhält das Copolymere ($F_3$).

Beispiele 1 bis 9 und Vergleichsbeispiele A bis J

Die Erfindung wird nachstehend anhand der Beispiele näher erläutert. Die in den Beispielen und Versuchen genannten Prozente beziehen sich, sofern nichts anderes vermerkt ist, auf das Gewicht der jeweils betrachteten Gesamtmischung.

Die in der Tabelle 2 angegebenen Mengen in Gewichtsprozent an Flammschutzmittel (Komponente D) und Novolak (Komponente E) wurden in einem

Fluidmischer der Firma Henschel, Kassel, bei 40°C gemischt. Das Gemisch aus diesen Komponenten wurde dann mit den auch in der Tabelle 2 angegebenen Mengen (in Gewichtsprozent) an thermoplastischen Harzen (Komponenten A + C), sowie Komponente F und gegebenenfalls dem Schlagzähmodifier (Komponente B) auf einem Extruder bei 230 bis 260°C aufgeschmolzen, homogenisiert und anschließend granuliert.

Vom Granulat wurden Standardteststäbchen für den UL 94-Test spritzgegossen.

0176775

Tabelle 2

| Beispiel Nr. | A Gew.% | B Gew.% | C Gew.% | D Gew.% | E Gew.% | F Gew.% | Einstufung UL 94 | Abtropfen n.br.[1] | Abtropfen br.[2] | Wärmeformbeständigkeit nach VICAT, DIN 53460 (°C) | Transparenz |
|---|---|---|---|---|---|---|---|---|---|---|---|
| 1 | $A_1$,35 | 0 | $C_1$,35 | $D_1$,10 | $E_{15}$,10 | $F_1$,10 | V1 | nein | nein | 123 | sehr gut |
| 2 | $A_1$,31,5 | 0 | $C_1$,31,5 | $D_2$,12 | $E_{15}$,10 | $F_1$,15 | V1 | nein | nein | 125 | sehr gut |
| 3 | $A_1$,29 | 0 | $C_1$,29 | $D_1$,12 | $E_{15}$,10 | $F_1$,20 | V0 | nein | nein | 121 | sehr gut |
| 4 | $A_1$,34 | 0 | $C_1$,34 | $D_4$,12 | $E_{15}$,10 | $F_2$,10 | V0 | nein | nein | 119 | sehr gut |
| 5 | $A_1$,30 | 0 | $C_1$,30 | $D_5$,10 | $E_{15}$,10 | $F_2$,20 | V0 | nein | nein | 123 | gut |
| 6 | $A_1$,27,5 | 0 | $C_1$,27,5 | $D_3$,10 | $E_{11}$,15 | $F_2$,20 | V1 | nein | nein | 118 | sehr gut |
| 7 | $A_1$,30 | 0 | $C_1$,30 | $D_4$,10 | $E_{15}$,10 | $F_2$,20 | V0 | nein | nein | 120 | sehr gut |
| 8 | $A_2$,23 | $B_7$,10 | $C_1$,35 | $D_2$,12 | $E_{15}$,10 | $F_3$,10 | V1 | nein | nein | 124 | mäßig |
| 9 | $A_2$,28 | $B_7$,10 | $C_1$,40 | $D_5$,12 | $E_{15}$,10 | $F_3$,10 | V0 | nein | nein | 127 | mäßig |
| Vergleichsversuche | | | | | | | | | | | |
| A | $A_1$,45 | 0 | $C_1$,45 | 0 | 0 | $F_1$,10 | keine | ja | ja | 136 | sehr gut |
| B | $A_1$,35 | 0 | $C_1$,35 | $D_1$,20 | 0 | $F_1$,10 | V1 | ja | nein | 116 | sehr gut |
| C | $A_1$,42,5 | 0 | $C_1$,42,5 | 0 | 0 | $F_1$,15 | keine | ja | ja | 138 | sehr gut |
| D | $A_1$,23,5 | 0 | $C_1$,32,5 | $D_2$,20 | 0 | $F_1$,15 | V1 | ja | nein | 117 | sehr gut |
| E | $A_1$,40 | 0 | $C_1$,40 | 0 | 0 | $F_1$,20 | keine | ja | ja | 132 | sehr gut |
| F | $A_1$,40 | 0 | $C_1$,40 | $D_1$,18 | 0 | $F_1$,20 | V0 | nein | nein | 114 | gut |
| G | $A_1$,40 | 0 | $C_1$,40 | 0 | 0 | $F_2$,20 | keine | ja | ja | 133 | sehr gut |
| H | $A_1$,32,5 | 0 | $C_1$,32,5 | $D_5$,15 | 0 | $F_2$,20 | V0 | nein | nein | 117 | gut |
| I | $A_2$,31,7 | $B_7$,10 | $C_1$,48,3 | 0 | 0 | $F_3$,10 | keine | ja | ja | 136 | mäßig |
| J | $A_2$,23,8 | $B_7$,10 | $C_1$,36,2 | $D_2$,20 | 0 | $F_3$,10 | V1 | ja | nein | 112 | mäßig |

[1] = nicht brennend; [2] = brennend;

Patentansprüche

1. Halogenfreie, selbstverlöschende thermoplastische Formmasse, enthaltend (vorzugsweise bestehend aus), jeweils bezogen auf die Formmasse aus A, B, C, D, E und F,

A 3 - 97 Gew.-% mindestens eines halogenfreien thermoplastischen Harzes, das, bezogen auf A, einpolymerisiert enthält

$a_1$) 60 bis 91 Gew.-% mindestens eines vinylaromatischen Monomeren mit 8 oder 9 C-Atomen und

$a_2$) 40 bis 9 Gew.-% von Acrylnitril

gegebenenfalls enthaltend

B bis zu 40 Gew.-% eines Elastomeren mit einer Glastemperatur unterhalb von 0°C, das in Form eines Pfropfmischpolymerisates gebildet aus Monomeren $a_1$) und $a_2$) der Komponente A angewendet wird,

C 97 - 3 Gew.-% mindestens eines weiteren halogenfreien thermoplastischen Harzes.

D 0,5 - 40 Gew.-% mindestens einer Phosphor enthaltenden Verbindung (Flammschutzmittel).

E 4 - 30 Gew.-% mindestens eines Phenol-Aldehyd-Harzes,

dadurch gekennzeichnet, daß es sich bei der Komponente C um Poly(phenylen)ether handelt

und

daß die Formmasse ferner

F 0,3 - 95 Gew.-% mindestens eines Copolymerisates aufweist, das aus einer Hauptkette und mindestens einer daran durch Kondensation angefügten Seitenkette besteht,
wobei die Hauptkette ein massenmittleres Molekulargewicht $\bar{M}_w$ im Bereich von 5 000 bis 5 Millionen aufweist und die Seitenkette(n) jeweils ein solches von 2 000 bis 80 000 aufweisen, bestimmt durch Gelpermeationschromatographie,

St0031

wobei ferner die Hauptkette eine Terpolymerisat darstellt, das einpolymerisiert enthält:

$f_a$) 60 - 91 Gew.-% mindestens eines vinylaromatischen Monomeren mit 8 oder 9 C-Atomen

$f_b$) 40 - 9 Gew.-% Acrylnitril

$f_c$) 0,3 - 10 Gew.-% mindestens eines Monomeren aus der Gruppe der Ester der Acrylsäure und Methacrylsäure, die zur Esterbildung befähigte Alkoholreste enthalten

und wobei jede Seitengruppe mindestens einen, gegebenenfalls nicht substituierten Poly(phenylen)etherrest, PPE, aufweist, der jeweils über die Gruppe X, den Rest eines mindestens bifunktionellen Kupplungsmittels, das Polymerisat -X-PPE der Seitengruppe an das (die) zur Etherbildung befähigten Monomere(n) ($f_c$) bindet.

2. Formmasse nach Anspruch 1, bestehend aus den Komponenten.

3. Formmasse nach Anspruch 1, dadurch gekennzeichnet, daß als Poly(phenylen)ether solche der allgemeinen Formel (I)

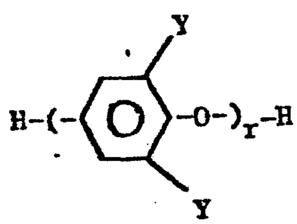

(I)

verwendet werden, in der stehen für:

Y einen monovalenten Substituenten wie H oder Kohlenwasserstoffe ohne tertiäres Kohlenstoffatom in α-Stellung mit 1 bis 25 C-Atomen oder Alkoxireste mit 1 bis 25 C-Atomen

r für ganze Zahlen von 20 bis 200, insbesondere 30 bis 150.

4. Formmasse nach Anspruch 1 dadurch gekennzeichnet, daß, bezogen auf die Komponente F, der Anteil der Hauptkette 20 - 85 Gew.-% und der Anteil der Seitenkette(n) 80 - 15 Gew.-% beträgt.

5. Formmasse nach Anspruch 1, dadurch gekennzeichnet, daß als vinylaromatisches Monomeres, $f_a$, Styrol und Hydroxibutylacrylat als Monomeres $f_c$ verwendet werden.

6. Verfahren zur Herstellung von Formmassen gemäß Anspruch 1 durch übliches Mischen aus den Komponenten.

7. Verwendung von Formmassen gemäß Anspruch 1 zur Herstellung von Formteilen.

8. Formteile aus Formmassen gemäß Anspruch 1.